Europäisches Patentamt

European Patent Office

Office européen des brevets

(19)

(11)  EP 1 081 510 B1

(12)  **FASCICULE DE BREVET EUROPEEN**

(45) Date de publication et mention
de la délivrance du brevet:
**06.10.2004  Bulletin 2004/41**

(51) Int Cl.[7]: **G01V 1/28**, G01V 1/30

(21) Numéro de dépôt: **00402163.0**

(22) Date de dépôt: **27.07.2000**

(54) **Méthode pour former un modèle d'une formation géologique, contraint par des données dynamiques et statiques**

Verfahren zur Bestimmung eines Modells einer geologischen Formation bedingt durch dynamische und statische Daten

Method of determining a model of a geological formation constrained by dynamic and static data

(84) Etats contractants désignés:
**AT BE CH CY DE DK ES FI FR GB GR IE IT LI LU MC NL PT SE**

(30) Priorité: **02.09.1999  FR 9911008**

(43) Date de publication de la demande:
**07.03.2001  Bulletin 2001/10**

(73) Titulaire: **Institut Français du Pétrole
92852 Rueil-Malmaison Cedex (FR)**

(72) Inventeurs:
• **Guerillot, Dominique
92500 Rueil Malmaison (FR)**

• **Pianelo, Laurent
64000 Pau (FR)**

(56) Documents cités:
**EP-A- 0 354 112          EP-A- 0 745 870
EP-A- 0 889 331          WO-A-97/38330**

• **VERNIK L: "Predicting lithology and transport properties from acoustic velocities based on petrophysical classification of siliciclastics" GEOPHYSICS, MARCH 1994, USA, vol. 59, no. 3, pages 420-427, XP002138796 ISSN: 0016-8033**

**Description**

La présente invention concerne une méthode pour former un modèle d'une zone souterraine contraint à la fois par des données dynamiques et statiques obtenues par des mesures ou observations.

Une des grandes voies de recherche actuellement pour l'amélioration des techniques de localisation de zones susceptibles de recéler des hydrocarbures, est d'arriver à donner de meilleures descriptions de l'architecture interne des réservoirs. Pour cela, les ingénieurs ont à leur disposition essentiellement deux types de données : les données dynamiques (gisement) et les données statiques (sismiques).

**I) Etat de la technique**

Pour construire des modèles de réservoirs bien représentatifs, on utilise couramment une technique d'inversion. On part d'un modèle géologique donné à priori et on le modifie de proche en proche pour réduire les écarts entre les valeurs des paramètres ou grandeurs physiques calculés par le modèle et des valeurs de ces mêmes grandeurs que l'on peut observer ou mesurer en certains points du milieu, ceci en minimisant au mieux une fonction-coût J.

Le modèle peut être optimisé par inversion de données statiques que l'on peut déduire de l'interprétation de sismogrammes ou que l'on a obtenues par des mesures dans des puits d'exploration. La paramètre le plus souvent utilisée pour l'inversion est l'impédance acoustique du milieu.

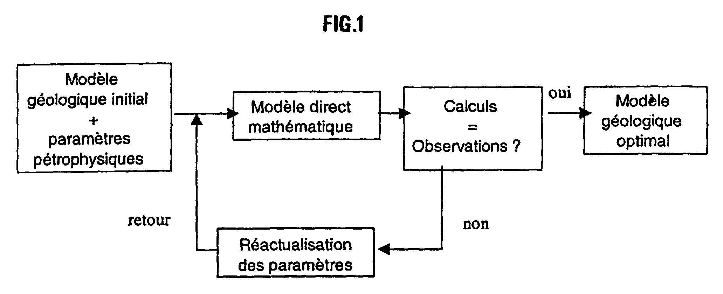

Le modèle peut être également optimisé par inversion de données dynamiques : données de production étalées dans le temps ou résultant d'essais de puits. Mais les données utilisées ne portent que sur des zones très localisées au voisinage immédiat des puits d'exploitation. Les paramètres utilisés dans l'inversion sont ici la perméabilité totale du milieu, ainsi que sa porosité. Dans les deux cas, l'algorithme d'inversion est celui montré à la Fig.1.

Les modèles obtenus par inversion des données statiques et dynamiques, sont réalisés séparément par des équipes spécialisées en ingéniérie de réservoir et en interprétation sismique. Les solutions auxquelles aboutissent les spécialistes dans chacun de ces deux domaines sont souvent multiples et en général très différentes selon que l'on utilise les données statiques ou les données dynamiques.

I-1 Modèle d'écoulement

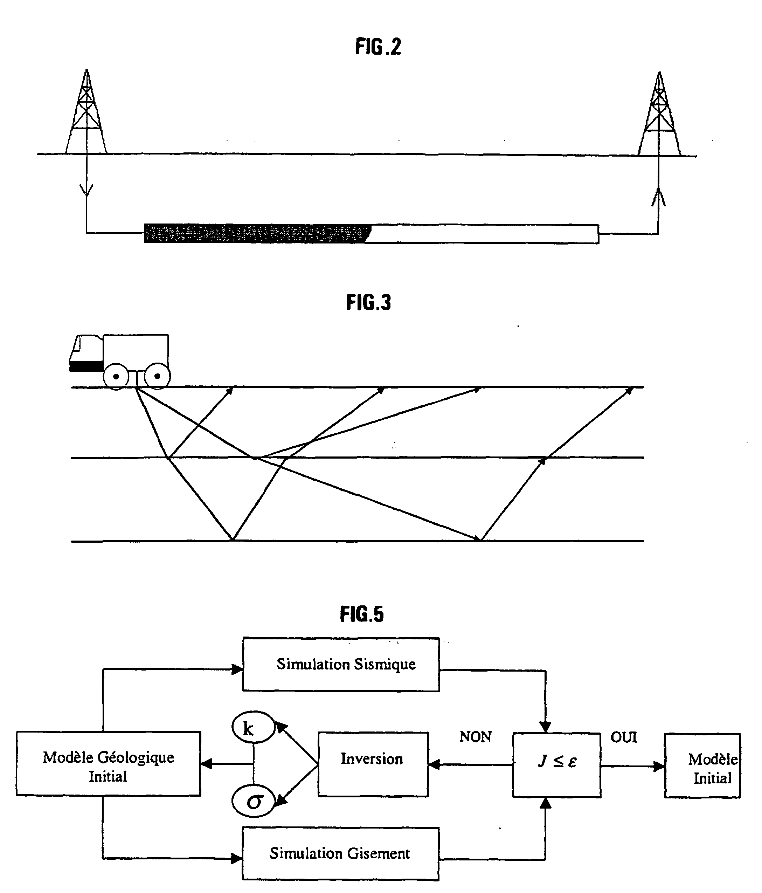

On considère un modèle mono-dimensionnel direct d'écoulement de fluides entre un puits injecteur et un puits producteur dans un réservoir schématisé (Fig.2) par un cylindre de longueur L s'étendant entre les deux puits. Connaissant la pression du fluide Po à un instant initial, son évolution sur un intervalle de temps [0,T] est régie par les équations suivantes, définissant le modèle direct :

$$p(x,0) = p_0(x) \qquad \forall x \in [0,L]$$

$$-k(0)\frac{\partial p}{\partial x}(0,t) = q_0(t) \qquad \forall t \in ]0,T]$$

$$\frac{\partial p}{\partial t} + \frac{\partial}{\partial x}(-k(x)\frac{\partial p}{\partial x}) = 0 \qquad \forall x \in ]0,L[ \text{ et } \forall t \in ]0,T]$$

$$p(L,t) = p_L \qquad \forall t \in ]0,T]$$

où :

p(x,t) est la pression du fluide à l'instant t et à la position x

k(x) la perméabilité de la roche à la position x

$q_0(t)$ est le débit injecté à l'instant t, et

$p_L$ est la pression à la distance L du puits injecteur,

que l'on résoud suivant un schéma numérique par différences finies. Une description de la perméabilité aux interfaces inspirée des schémas en volumes finis permet de prendre en compte la continuité du flux aux interfaces. On suppose que le réservoir est un « assemblage de tranches » de lithologies homogènes, de perméabilités différentes qu'il s'agit d'identifier. Comme on dispose de mesures de pression au puits injecteur, en x=0, on construit la fonction-objectif suivante :

$$J(k) = \frac{1}{2} \int_0^T (p(0,t) - \hat{p}(t))^2 \, dt$$

et on procède ainsi à l'inversion du paramètre ou grandeur physique *k* par des méthodes d'optimisation classiques, comme la méthode de l'état adjoint qui permet un calcul exact du gradient de la fonction-coût par rapport au paramètre.

I-2 Modèle sismique

On considère un bassin sédimentaire (Fig.3) constitué de plusieurs couches géologiques, ayant chacune une impédance acoustique propre, que l'on a exploré par voie sismique. On dispose de sismogrammes traduisant la réponse du milieu (les ondes renvoyées par les discontinuités du sous-sol) en réponse à l'émission d'ondes sismiques par une source. L'équation des ondes est une équation hyperbolique, où l'inconnue y(t,z) est l'ébranlement du sous-sol dépendant du temps t et de la profondeur z, avec l'impédance acoustique du milieu σ(z) comme paramètre. Pour traiter cette équation, on emploie le même type de schéma par différence-finies que pour l'équation d'écoulement, i. e. un schéma où l'on utilise une description des impédances aux interfaces inspirée des schémas en volumes finis. En raison des conditions initiales, il s'agit ici d'un schéma explicite. Les interfaces géologiques repérées en sismique-réflexion sont les surfaces de séparation des milieux d'impédances acoustiques différentes.

Le milieu étant au repos à l'instant initial t=0, et connaissant l'impulsion en pression *g(t)* communiquée au milieu en surface à chaque instant t, l'ébranlement y(z,t) est la solution du modèle direct traduit par le système d'équations de modélisation suivant (*z* désignant la profondeur en temps double) :

$$(P_s) \begin{cases} \sigma(z)\dfrac{\partial^2 y}{\partial t^2} - \dfrac{\partial}{\partial z}\left(\sigma(z)\dfrac{\partial y}{\partial z}\right) = 0 & \text{pour } z > 0 \text{ et pour } t > 0 \\[2mm] y(z,0) = \dfrac{\partial y}{\partial t}(z,0) = 0 & \text{pour } z \geq 0 \\[2mm] -\sigma(0)\dfrac{\partial y}{\partial z}(0,t) = g(t) & \text{pour } t > 0 \\[2mm] y(L,t) = 0 & \text{pour } t > 0 \end{cases}$$

Comme précédemment, on considère le milieu comme un assemblage de tranches découpées suivant la verticale ayant chacune une valeur d'impédance. Les mesures *y* étant connues, on construit une fonction-coût :

$$J(\sigma) = \frac{1}{2} \int_0^T (y(0,t) - \hat{y}(t))^2 \, dt$$

permettant de réaliser l'inversion de l'impédance acoustique.

I-3 Problème lié au manque de données

La réussite d'une procédure d'inversion dépend grandement, on le sait, de la qualité et de la quantité des observations dont on dispose. Plus elles sont nombreuses, meilleure sera la qualité du résultat de l'inversion. Un manque de données entraîne une information moyennée sur le paramètre que l'on cherche à inverser.

Un problème inverse réalisé sur deux mailles informées en paramètres $p_1$, $p_2$ avec un nombre de données insuffisant ne permet d'accéder qu'à la moyenne des deux paramètres. En gisement par exemple, c'est la moyenne

harmonique $\bar{p}$ des deux paramètres qui va être retourné comme résultat :

$$\frac{1}{\bar{p}} = \frac{1}{2}\left(\frac{1}{p_1} + \frac{1}{p_2}\right)$$

A une même moyenne harmonique $\bar{p}$, correspond un grand nombre de doublets possibles de paramètre $p_1$ et $p_2$ et par conséquent de modèles différents pour lesquels les simulations (gisement ou sismique) vont s'ajuster aux observations. On vérifie ce phénomène sur l'exemple ci-après de simulation 1D d'un écoulement réalisée dans un réservoir composé d'une vingtaine de mailles, avec une perméabilité $k$, par maille (au centre de la maille). Il s'agit d'un milieu tri modal, représentant un milieu perméable (p. ex du grès) coupé par une barrière imperméable (par exemple de l'argile). Il s'agit de savoir si l'inversion du modèle permet de retrouver le gradient de perméabilité. Les données sont les pressions enregistrées au puits injecteur au cours du temps.

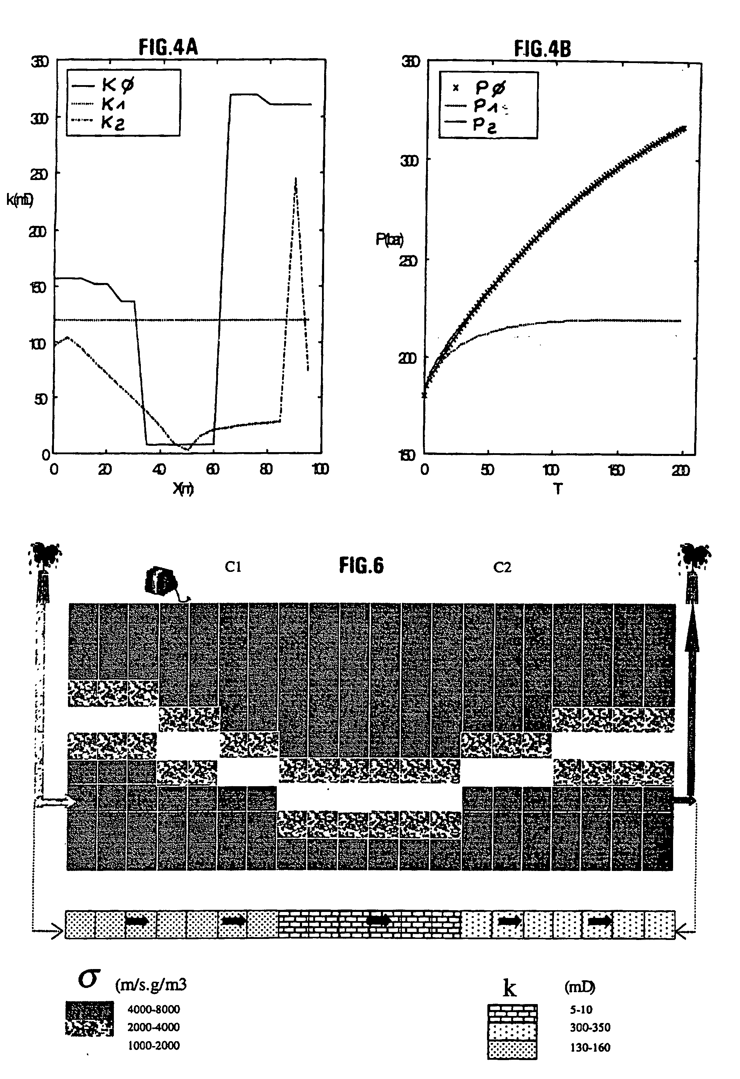

Comme le montre la Fig.4A, la répartition des perméabilités obtenues après l'inversion (graphe $k_2$) avec un gradient exact calculé par la méthode de l'état adjoint, est très éloignée de la répartition qui a servi à créer les données du puit injecteur (graphe $k_0$), alors même que les réponses du modèle direct (Fig. 4B) appliqué à cette répartition (graphe $P_2$), « calent » parfaitement aux données (graphe $P_0$).Ceci prouve que plusieurs modèles, parfois très éloignés du modèle réel, peuvent résoudre le problème inverse.

Différents aspects de l'art antérieur dans le domaine considéré sont décrits par exemple dans les références suivantes :

- EP 0 745 870 A (PHILIPS PETROLEUM CO), 4 décembre 1996
- Vernik L., 'Predicting lithology and transport properties from acoustic velocities based on petrophysical classification of siliclastics', Geophysics, Mai 1994, XP002138796

En effet, la première référence décrit une méthode d'inversion pour modéliser des propriétés pétrophysiques d'un réservoir souterrain contrainte à la fois et successivement par des données sismiques et par des données lithologiques.

Par la référence Vernik L., on connaît une méthode pour prédire la lithologie et des propriétés de transport à partir de vitesses acoustiques, basée sur une classification pétrophysique des sédiments silicoclastiques. Elle propose des formules permettant de relier la perméabilité à l'impédance acoustique.

## II) La méthode selon l'invention

Méthode pour former automatiquement une représentation des variations d'une première grandeur physique statique estimée d'après des données d'exploration et d'une deuxième grandeur physique dynamique estimée d'après des données de production de fluides et caractérisant les terrains d'une zone souterraine produisant des fluides, par une technique d'inversion nécessitant la définition d'un modèle lithologique initial avec implémentation d'un modèle direct initial dépendant des deux grandeurs physiques les deux étant reliées l'une à l'autre et, contrainte à la fois par des données d'exploration et des données dynamiques, ces données étant obtenues par des mesures ou observations. Elle comporte :

- l'utilisation de données de production de fluides pour contraindre l'inversion ;

- le choix d'une structure géologique a priori de la zone souterraine produisant des fluides avec une distribution en trois dimensions de la première grandeur physique ($\sigma$) et de la deuxième grandeur physique (k) ;

- l'implémentation de deux modèles directs initiaux dépendant respectivement de la première grandeur physique ($\sigma$) et de la deuxième grandeur physique (k) ; et

- l'optimisation d'au moins un modèle implémenté par application itérative d'une inversion d'au moins une grandeur physique, les dites grandeurs étant reliées l'une à l'autre par une relation de combinaison, de façon à obtenir une représentation de la structure de la zone en relation avec les deux grandeurs physiques considérées, satisfaisant au mieux à la combinaison des données d'exploration et de production de fluides.

La méthode comporte par exemple l'optimisation itérative du modèle implémenté en réalisant une inversion simultanée de la première grandeur physique et de la deuxième grandeur physique avec optimisation d'une fonction-coût globale dépendant de ces deux grandeurs.

On optimise par exemple une fonction-coût qui est la somme de termes mesurant les écarts entre les prévisions de chaque modèle direct et les données obtenues par mesure ou observation de la grandeur correspondante et de termes d'écart formés en tenant compte de la dite relation de combinaison.

Suivant un mode de mise en oeuvre, on optimise chaque modèle implémenté en minimisant la fonction objectif par la détermination de la valeur exacte de son gradient, en utilisant la méthode de l'état adjoint.

Les données de production sont par exemple des mesures obtenues dans des puits au travers de la zone souterraine et les données d'exploration, des signaux sismiques captés par des récepteurs sismiques en réponse à des ondes transmises dans la formation, la première grandeur physique, la perméabilité du milieu et la deuxième grandeur physique, l'impédance du milieu relativement à ces ondes.

Les données de production sont par exemple des mesures de pression, les données d'exploration, des signaux captés par des récepteurs en réponse à des ondes transmises dans la formation (des ondes élastiques ou sismiques par exemple), le premier paramètre, la perméabilité du milieu et le deuxième paramètre, l'impédance du milieu relativement à ces ondes (l'impédance acoustique par exemple).

Le nombre de modèles susceptibles de satisfaire à la fois à des contraintes dynamiques et statiques imposées, est beaucoup plus réduit. Les ingénieurs de réservoir par application de la méthode, disposent de ce fait de modèles améliorés en matière de caractérisation des réservoirs permettant une meilleure efficacité dans leur exploitation. Le modèle que l'on obtient de la zone souterraine permet de mieux mettre en évidence les barrières de perméabilité ou d'impédance acoustique par exemple. On peut ainsi mieux cerner des zones susceptibles de receler des hydrocarbures, ou des zones susceptibles de servir de lieux de stockage de gaz, de déchets ou autres.

La difficulté résultant de l'utilisation des formules proposées par Vernik L. et permettant de relier la perméabilité à l'impédance acoustique dans le schéma d'inversion décrit dans la référence EP 0 745 870 A, est résolue par la revendication 1 de la présente invention. La méthode selon l'invention permet alors de modéliser un réservoir souterrain produisant des fluides par une technique d'inversion contrainte à la fois et simultanément par des données sismiques et par des données de production.

D'autres caractéristiques et avantages de la méthode selon l'invention, apparaîtront à la lecture de la description ci-après d'un exemple non limitatif de réalisation, en se référant aux dessins annexés où :

- la Fig.1 montre un organigramme classique d'optimisation d'un modèle par un processus d'inversion ;

- la Fig.2 est un schéma illustratif d'un gisement en cours de production ;

- la Fig.3 est un schéma illustratif d'une zone souterraine soumise à exploration sismique ;

- les Fig.4A, 4B illustrent la dispersion possible des modèles due à l'insuffisance des données de contraintes ;

- la Fig.5 montre l'organigramme d'inversion combinée selon l'invention ;

- la Fig.6 montre un modèle synthétique a priori, formé à partir d'un structure gisement en exploitation, utilisé pour la validation de la méthode, avec une distribution de valeurs d'impédance acoustique et de perméabilité ;

- les Fig.7A, 7B montrent, à titre de comparaison, diverses courbes de variation respectivement de la perméabilité et de la pression au puits injecteur ;

- les Fig.8A, 8B montrent, à titre de comparaison, diverses courbes de variation respectivement de la perméabilité et de la fonction-coût en fonction du nombre d'itérations, dans le cas d'une inversion classique et d'une inversion par la méthode selon l'invention, K1, K2, K3 correspondant respectivement aux itérations d'ordre 100, 200 et 300 ;

- les Fig.9A, 9B, 9C montrent, à titre de comparaison, diverses courbes de variation respectivement de l'impédance acoustique en fonction du temps de parcours des ondes (Fig.9A), de l'amplitude des vibrations captées par des récepteurs sismiques en surface (Fig. 9B) et des fonctions-coûts dans le cas d'une inversion classique et d'une inversion couplée (Fig.9C), toutes ces variations correspondant à une première colonne du modèle synthétique de la Fig.5 ; et

- les Fig. 10A, 10B, 10C montrent les mêmes courbes de variation obtenues au niveau d'une autre colonne du même modèle synthétique.

### III) DESCRIPTION

La méthode selon l'invention permet de réaliser un modèle tenant compte simultanément de l'ensemble des données disponibles aussi bien statiques que dynamiques.

Elle consiste essentiellement à choisir une structure géologique initiale commune choisie a priori informée avec les deux paramètres et à appliquer une technique d'inversion où l'on inverse simultanément un paramètre d'écoulement (perméabilité absolue) et un paramètre sismique (impédance acoustique). En reliant ces deux paramètres, on ajoute ainsi de l'information à chaque inversion, (de l'information sismique est ajoutée par exemple comme contrainte « régionale » dans le cadre d'un modèle d'écoulement) et on réduit l'intervalle de valeurs « admissibles » de chacun des paramètres. L'apport d'information non seulement réduit le nombre de solutions possibles (car une contrainte est ajoutée), mais aussi il améliore sensiblement les modèles obtenus par rapport au modèle réel.

III-1 Relations perméabilité-impédance

Le couplage est réalisé en utilisant des relations connues de l'homme de l'art, reliant la perméabilité du milieu et son impédance acoustique par le biais de la porosité.

*Relation perméabilité-porosité*

Pour exprimer la relation entre la perméabilité k et la porosité on utilise par exemple la formule de Carman bien connu des spécialistes :

$$k = B\phi^3 \frac{d^2}{\tau(\phi)}$$

où B est une constante pour un milieu donné. Le paramètre $\frac{k}{d^2}$ est une fonction de $\phi^n$, n variant expérimentalement, suivant la porosité, de 7 ou plus pour des porosité faibles ($\phi<5$%) à moins de 2 pour les milieux poreux non consolidés ($\phi>>30$%).

*Relation impédance-porosité*

Pour exprimer la relation entre l'impédance acoustique du milieu et la porosité, on combine par exemple les équations de Wyllie pour la diagraphie sonique $\Delta t$ et pour la diagraphie de densité $\varphi$ pour exprimer l'impédance acoustique en fonction des paramètres pétrophysiques du milieu, notamment de la porosité $\phi$.

Pour les formations sans argile, les relations entre les données de diagraphie sont :

$$\Delta t = \phi \Delta t_f + (1 - \phi) \Delta t_{ma}$$

$$\varphi = \phi \varphi_f + (1 - \phi) \varphi_{ma}$$

En combinant les relations précédentes, sachant que l'impédance $\sigma = \varphi V = \frac{\varphi}{\Delta t}$, on obtient:

$$\phi = \frac{\varphi_{ma} - \sigma.\Delta t_{ma}}{\sigma (\Delta t_f - \Delta t_{ma}) - (\varphi_f - \varphi_{ma})}$$

avec :

$\phi$ : porosité
$\sigma$ : impédance acoustique
$\varphi_f$ et $\Delta t_f$ : densité et temps de transit de la formation
$\varphi_{ma}$ et $\Delta t_{ma}$ : densité et temps de transit de la nature

Si on veut exprimer $\sigma$ en fonction de $\phi$, on obtient :

$$\sigma = \frac{\varphi_{ma} + \phi(\varphi_f - \varphi_{ma})}{\phi(\Delta t_f - \Delta t_{ma}) + \Delta t_{ma}}$$

Pour une formation avec argile, les mesures de diagraphie $\Delta t$ et $\varphi$, s'expriment en fonction des mêmes paramètres par les relations :

$$\Delta t = \phi \Delta t_f + (1 - \phi - V_{sh}) \Delta t_{ma} + V_{sh} \Delta t_{sh}$$

$$\varphi = \phi \varphi_f + (1 - \phi - V_{sh}) \varphi_{ma} + V_{sh} \varphi_{sh}$$

ce qui, en les combinant, donne :

$$\phi = \frac{(1 - V_{sh})(\varphi_{ma} - \sigma \cdot \Delta t_{ma}) + V_{sh}(\varphi_{sh} - \sigma \cdot \Delta t_{sh})}{\sigma \cdot (\Delta t_f - \Delta t_{ma}) - (\varphi_f - \varphi_{ma})}$$

avec:

$V_{sh}$ : pourcentage d'argile
$\varphi_{sh}$ et $\Delta t_{sh}$ : densité et temps de transit de l'argile

*Relation perméabilité-impédance*

En combinant les équations de Wyllie avec celles de Carman, on obtient une relation directe entre la perméabilité du milieu et son impédance acoustique. Pour une formulation sans argile, on aboutit à :

$$k = B\left( \frac{(\varphi_{ma} - \sigma \cdot \Delta t_{ma})}{\sigma \cdot (\Delta t_f - \Delta t_{ma}) - (\varphi_f - \varphi_{ma})} \right)^3 \frac{d^2}{\tau(\phi)}$$

et pour une formation avec argile, à :

$$k = B\left( \frac{(1 - V_{sh})(\varphi_{ma} - \sigma \cdot \Delta t_{ma}) + V_{sh}(\varphi_{sh} - \sigma \cdot \Delta t_{sh})}{\sigma \cdot (\Delta t_f - \Delta t_{ma}) - (\varphi_f - \varphi_{ma})} \right)^3 \frac{d^2}{\tau(\phi)}$$

Notons la relation *f*: on a ainsi $k = f(\sigma)$

*Couplage*

En reliant ainsi les deux paramètres k et $\sigma$, on peut alors coupler les deux problèmes. On part d'une structure géologique initiale maillée, avec une impédance et une perméabilité dans chaque maille, liées par la relation *f*.
En appliquant à cette structure les équations de modélisation formant les deux modèles directs (d'écoulement et sismique) ou d'autres utilisés dans des simulateurs d'un type connu : un simulateur sismique tel que Interwell™ par exemple et un simulateur de gisement tel que Athos™, on obtient des réponses en pression (au puits injecteur) et en vibration (à la surface). On calcule alors la fonction-coût. Elle est la somme des deux fonctions coût de chaque problème et d'un terme qui mesure les écarts entre les perméabilités et les impédances dans chaque maille, calculés grâce à la fonction *f*.

$$j(k, \sigma) = \frac{1}{2} \int_0^T (p(0,t) - \hat{p}(t))^2 dt + \frac{1}{2} \int_0^T (y(0,t) - \hat{y}(t))^2 dt + \frac{1}{2} \| k - f(\sigma) \|^2 + \frac{1}{2} \| \sigma - f^{-1}(k) \|^2$$

On réalise l'inversion suivant l'organigramme de la Fig.5, en utilisant, là aussi, la méthode de l'état adjoint pour le calcul exact du terme $\nabla J$. Puis, on réactualise chaque paramètre (les perméabilités et les impédances) jusqu'à obtenir un modèle calant avec les données.

**IV) Résultats**

L'exemple ci-après montre clairement que l'addition de données sismiques à des résultats de tests d'écoulement améliore l'inversion des deux paramètres $k$ et $\sigma$. et que l'on peut retrouver grâce au couplage, des informations qui seraient perdues avec une inversion classique, comme de forts gradients dans la répartition des deux paramètres.

Résultats numériques

On a utilisé le modèle synthétique de la Fig.6 formé à partir d'un exemple géologique connu, avec les distributions indiquées de valeurs d'impédance et de perméabilité.

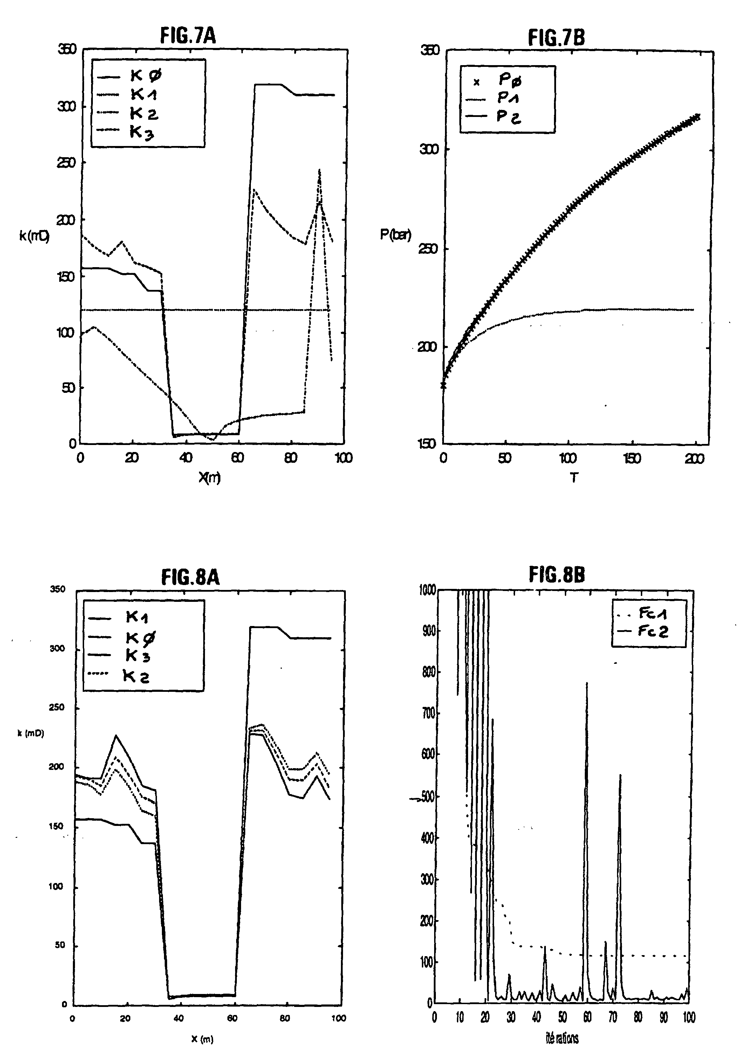

On peut immédiatement constater (Fig. 7A, 7B) que la répartition de perméabilité trouvée par la méthode couplée (graphe K3) est beaucoup plus proche de la répartition recherchée, qui a servi à créer les données, (graphe K0) que celle (graphe K2) calculée par la méthode classique. La réponse en pression correspondante (graphe P2) s'ajuste quant à elle parfaitement avec les données que l'on s'est fixé au puits injecteur (graphe P0). Le résultat essentiel est que le saut de perméabilité (sa position et son amplitude relative) est restitué dans la répartition trouvée par application de la méthode, alors qu'il est énormément « lissé » par une méthode classique. En outre, l'opération est plus rapide comme on le vérifie (Fig.8A) en comparant les résultats pour une même fonction-coût i.e.

$$J(k) = \frac{1}{2}\int_0^T (p(0,t) - \hat{p}(t))^2 dt\,).$$

Si celle de l'inversion couplée présente certaines oscillations (graphe Fc2 sur la Fig.8B), elle reste très inférieure à partir d'une certaine valeur à celle de l'inversion classique (graphe Fc1), pratiquement à chaque pas d'itération. On améliore donc la qualité du résultat, et la rapidité du temps de calcul.

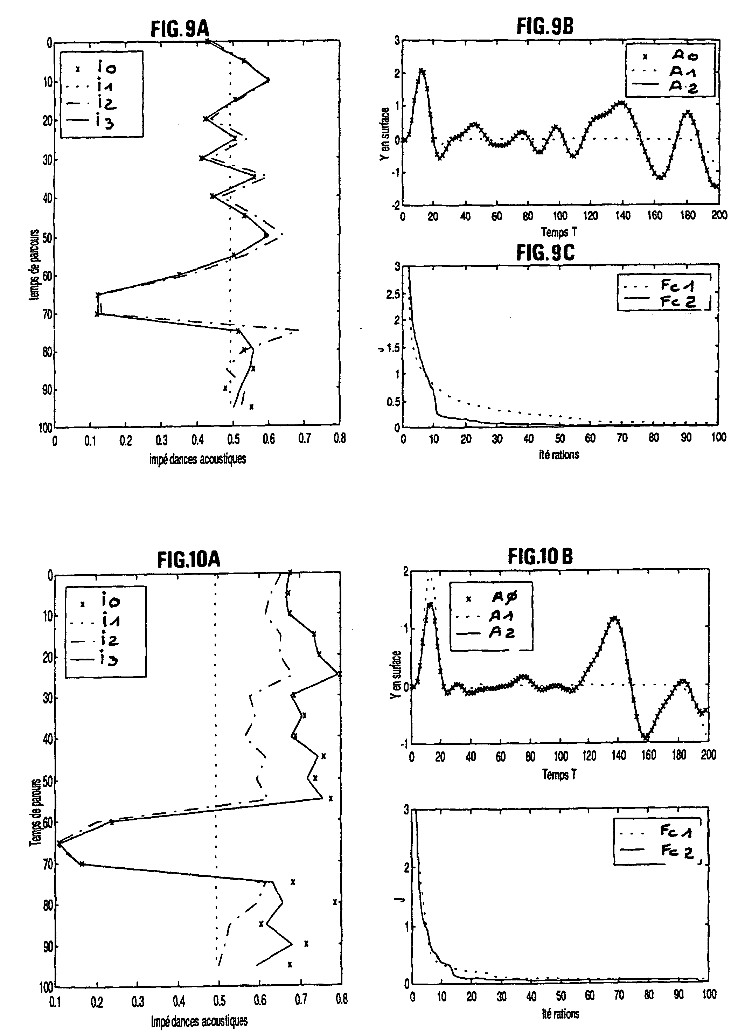

Les Fig.9, 10 montrent les résultats comparés que l'on obtient pour la répartition des impédances, des ébranlements en surface et des fonctions-coûts pour deux colonnes différentes du modèle synthétique choisi.

Pour la première colonne C1 (Fig.9A), on remarque que le calcul couplé (graphe i3) apporte une amélioration sensible en ce qui concerne la valeur exacte des points, qui calent ici parfaitement avec les valeurs recherchées (graphe i0). Le progrès essentiel vient de la rapidité de l'algorithme, car le graphique (Fig.9C) montre que la fonction-coût du calcul couplé (graphe Fc2) décroît bien plus rapidement que celle du calcul classique (graphe Fcl). A noter encore une fois, que l'on a comparé ici la même fonction, i. e.

$$J(\sigma) = \frac{1}{2}\int_0^T (y(0,t) - \hat{y}(t))^2 dt\,.$$

En ce qui concerne l'autre colonne C2 (cf. Fig.10) du modèle sismique synthétique, on vérifie (Fig.9A) que la distribution des impédances obtenue par la méthode couplée (graphe i3), est tout à fait en accord avec les impédances recherchées (graphe i0), ce qui est loin d'être le cas avec la distribution obtenue par l'inversion classique (graphe i2).

On constate donc sur ces deux exemples que l'amélioration apportée par la méthode selon l'invention est significative, qu'elle porte tant sur la rapidité des calculs, avec une fonction-objectif qui décroît plus rapidement que par une inversion classique, que sur les valeurs des impédances retrouvées après inversion, valeurs plus proches de celles de la répartition recherchée.

**Revendications**

**1.** Méthode pour former automatiquement une représentation des variations d'une première grandeur physique statique estimée d'après des données d'exploration et d'une deuxième grandeur physique dynamique estimée d'après des données de production de fluides et caractérisant les terrains d'une zone souterraine produisant des fluides, par une technique d'inversion nécessitant la définition d'un modèle lithologique initial avec plémentation d'un modèle direct initial dépendant des deux grandeurs physiques les deux étant reliées l'une à l'autre et contraintes à la fois par des données d'exploration et des données dynamiques, ces données étant obtenues par des mesures ou observations, laquelle comporte :

- l'utilisation de données de production de fluides pour contraindre l'inversion ;

- le choix d'une structure géologique a priori de la zone souterraine produisant des fluides avec une distribution en trois dimensions de la première grandeur physique (σ) et de la deuxième grandeur physique (k) ;

- l'implémentation de deux modèles directs initiaux dépendant respectivement de la première grandeur physique (σ) et de la deuxième grandeur physique (k) ; et

- l'optimisation d'au moins un modèle implémenté par application itérative d'une inversion d'au moins une desdites grandeurs physiques, lesquelles grandeurs sont reliées l'une à l'autre par une relation de combinaison, de façon à obtenir une représentation de la structure de la zone en relation avec les deux grandeurs physiques considérées, satisfaisant au mieux à la combinaison des données d'exploration et de production de fluides.

2. Méthode selon la revendication 1, laquelle comporte l'optimisation itérative du modèle implémenté en réalisant une inversion simultanée de la première grandeur physique (k) et de la deuxième grandeur physique (σ) avec optimisation d'une fonction-coût globale J(k, σ) et dépendant de ces deux grandeurs.

3. Méthode selon la revendication 2, dans laquelle on optimise une fonction-coût J(k, σ) qui est la somme de termes mesurant les écarts entre les prévisions de chaque modèle direct et les données obtenues par mesure ou observation de la grandeur correspondante et de termes d'écart formés en tenant compte de la dite relation de combinaison.

4. Méthode selon l'une des revendications précédentes, dans laquelle on optimise chaque modèle implémenté en minimisant la fonction objectif par la détermination de la valeur exacte de son gradient, en utilisant la méthode de l'état adjoint.

5. Méthode selon l'une des revendications précédentes, dans laquelle les données de production sont des mesures obtenues dans des puits au travers de la zone souterraine et les données d'exploration sont des signaux sismiques captés par des récepteurs sismiques en réponse à des ondes transmises dans la formation, la première grandeur physique est la perméabilité du milieu et la deuxième grandeur physique est l'impédance du milieu relativement à ces ondes.

**Patentansprüche**

1. Verfahren zur automatischen Bildung einer Darstellung der Schwankungen einer mittels Explorationsdaten abgeschätzten ersten statischen physikalischen Größe und einer mittels Fluidproduktionsdaten abgeschätzten zweiten dynamischen physikalischen Größe, die die Formationen einer unterirdischen fluidproduzierenden Zone charakterisiert, durch eine Inversionsmethode, die die Bestimmung eines lithologischen Anfangsmodells erfordert, mit Implementierung eines direkten von den zwei physikalischen Größen abhängigen Anfangsmodells, welche Größen miteinander verbunden und zugleich durch Explorationsdaten und dynamische Daten erzwungen sind, wobei diese Daten durch Messung oder Beobachtung erhalten sind, welches Verfahren die folgenden Stufen umfaßt :

- Verwendung von Fluidproduktionsdaten zum Inversionszwang,

- Wahl einer a-priori geologischen Struktur der unterirdischen fluidproduzierenden Zone mit einer dreidimensionalen Verteilung der ersten physikalischen Größe (σ) und der zweiten physikalischen Größe (k),

- Implementierung von zwei direkten Anfangsmodellen, die von der ersten physikalischen Größe (σ) bzw. von der zweiten physikalischen Größe (k) abhängen, und

- Optimierung von wenigsten einem der implementierten Modellen durch iterative Anwendung einer Inversion wenigstens einer der besagten physikalischen Größen, welche durch eine Kombinationsbeziehung verbunden sind, um eine Darstellung der Zonenstruktur in Verbindung mit den zwei betrachteten physikalischen Größen zu erhalten, die der Kombination der Explorations- und Fluidproduktionsdaten bestens genügt.

**2.** Verfahren gemäß Anspruch 1, in welchem iterative Optimierung des implementierten Modells durch gleichzeitige Inversion der ersten physikalischen Größe (k) und der zweiten physikalischen Größe ($\sigma$) mit Optimierung einer globalen Kostenfunktion J(k, $\sigma$), die von diesen zwei Größen abhängt, ausgeführt wird.

**3.** Verfahren gemäß Anspruch 2, in welchem eine Kostenfunktion J(k,$\sigma$), die die Summe der Glieder ist, die den Unterschied zwischen den Vorhersagen jedes direkten Modells und den mittels Messung oder Beobachtung der entsprechenden Größe und von durch Berücksichtigung der besagten Kombinationsbeziehung gebildete Unterschiedsglieder erhaltenen Daten messen, optimiert wird.

**4.** Verfahren gemäß irgendeinem der vorstehenden Ansprüche, in welchem jedes implementierte Modell durch Minimierung der Zielfunktion mittels Bestimmung des Genauwertes des Gradients mit der adjoint-state-Methode optimiert wird.

**5.** Verfahren gemäß irgendeinem der vorstehenden Ansprüche, in welchem die Produktionsdaten in durch die unterirdische Zone gebohrten Bohrlöcher erhaltene Messungen sind und die Explorationsdaten seismische Signale sind, die von seismische Empfänger in Antwort auf durch die Formation übertragte Wellen empfangen werden, wobei die erste physikalische Größe die Permeabilität des Mediums und die zweite physikalische Größe die Impedanz des Mediums gegen diese Wellen ist.

**Claims**

**1.** A method for automatically forming a representation of the variations of a first static physical quantity estimated from exploration data and of a second dynamic physical quantity estimated from fluid production data and characterizing the formations of an underground zone producing fluids, by means of an inversion technique requiring definition of an initial lithologic model with implementation of an initial direct model depending on the two physical quantities which are related to one another and constrained both by exploration data and dynamic data, these data being obtained by measurements or observations, comprising :

- using fluid production data to constrain the inversion,

- selecting an a priori geologic structure of the underground zone producing fluids with distribution in three dimensions of first physical quantity ($\sigma$) and of second physical quantity (k),

- implementing two initial direct models respectively depending on first physical quantity ($\sigma$) and on second physical quantity (k), and

- optimizing at least one model implemented by iterative application of an inversion of at least one of said physical quantities, said quantities being related to one another by a combination relation, so as to obtain a representation of the structure of the zone in connection with the two physical quantities considered, best meeting the exploration and fluid production data combination.

**2.** A method as claimed in claim 1, comprising iterative optimization of the model implemented by performing simultaneous inversion of first physical quantity (k) and of second physical quantity ($\sigma$) with optimization of a global cost function J(k,$\sigma$) and depending on these two quantities.

**3.** A method as claimed in claim 2, wherein a cost function J(k,$\sigma$) which is the sum of terms measuring the differences between the predictions of each direct model and the data obtained by measurement or observation of the corresponding quantity and of difference terms formed by taking account of said combination relation is optimized.

**4.** A method as claimed in any one of the previous claims, wherein each model implemented is optimized by minimizing the objective function through determination of the exact value of the gradient thereof, using the adjoint state method.

**5.** A method as claimed in any one of the previous claims, wherein the production data are measurements obtained in wells through the underground zone and the exploration data are seismic signals picked up by seismic receivers in response to waves transmitted in the formation, the first physical quantity is the permeability of the medium and the second physical quantity is the impedance of the medium in relation to these waves.

## FIG.1

```
┌──────────────┐        ┌──────────────┐      ┌──────────────┐   oui   ┌──────────────┐
│   Modèle     │        │ Modèle direct│      │   Calculs    │────────▶│   Modèle     │
│géologique initial│───▶│ mathématique │─────▶│      =       │         │ géologique   │
│      +       │        │              │      │ Observations ?│        │   optimal    │
│  paramètres  │        └──────────────┘      └──────────────┘         └──────────────┘
│pétrophysiques│                                      │
└──────────────┘                                      │ non
                ▲                                      │
        retour  │         ┌──────────────┐            │
                └─────────│Réactualisation│◀──────────┘
                          │ des paramètres│
                          └──────────────┘
```

**FIG.2**

**FIG.3**

**FIG.5**

## FIG.4A

## FIG.4B

## FIG.6

$\sigma$ (m/s.g/m3)

- 4000-8000
- 2000-4000
- 1000-2000

k (mD)

- 5-10
- 300-350
- 130-160

## FIG.7A

## FIG.7B

## FIG.8A

## FIG.8B

## FIG.9A

## FIG.9B

## FIG.9C

## FIG.10A

## FIG.10 B